Europäisches Patentamt

European Patent Office

Office européen des brevets

(11) Veröffentlichungsnummer: **0 328 706**
**A1**

## (12) EUROPÄISCHE PATENTANMELDUNG

(21) Anmeldenummer: **88102375.8**

(22) Anmeldetag: **18.02.88**

(51) Int. Cl.⁴: **H02J 9/06**

(43) Veröffentlichungstag der Anmeldung:
**23.08.89 Patentblatt 89/34**

(84) Benannte Vertragsstaaten:
**AT BE CH DE ES FR GB GR IT LI LU NL SE**

(71) Anmelder: **Viessmann, Hans, Dr.**
**Im Hain 24**
**D-3559 Battenberg/Eder(DE)**

(72) Erfinder: **Viessmann, Hans, Dr.**
**Im Hain 24**
**D-3559 Battenberg/Eder(DE)**
Erfinder: **Czepa, Arnold**
**Kreuzstrasse 23**
**D-3559 Burgwald 1(DE)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **Sicherheitsvorrichtung für Steuer- und Regeleinrichtungen.**

(57) Die Erfindung betrifft eine Sicherheitsvorrichtung für elektrische Steuer- und Regeleinrichtungen. Bei Ausfall einer im Normalbetrieb eine Steuer- oder Regeleinrichtung (2) speisenden Stromversorgungseinrichtung (1, 10) oder bei Betätigung eines Handschalters (S) für einen Notbetrieb werden in einer Umschalteinrichtung (4, 5) vorgesehene elektromechanische Relais zum Umschalten auf Reserve-bzw. Notbetrieb stromlos gemacht, und die im stromlosen Zustand von den von den Relaiswicklungen ($R_1$, $R_n$) betätigten Schaltkontakte ($K_1$, ... $K_n$) nehmen dann die für den Reserve- oder Notbetrieb vorgesehenen Schaltstellungen ein. Eine automatische Umschaltung auf Reserve- oder Notbetrieb wird auch bei Ausfall von Signalen über Betriebszuständen der geregelten Objekte ($L_1$, ... $L_z$) abgebenden Fühlern ($\vartheta_1$, ... $\vartheta_x$; $S_1$, ... $S_y$) bewirkt. Ein in der Regeleinrichtung (22) vorgesehener Digitalrechner (30, 30') speichert die Betriebszustände und die Signalwerte der Fühler und vergleicht die jeweils aktuellen Zustände und Signalwerte mit früher vorliegenden Zuständen und führt auf dieser Basis Plausibilitätskontrollen aus. Nach Rückkehr des Systems in den Normalzustand wird anhand der gespeicherten Zustände der vor Ausfall der Fühler bzw. vor Umschaltung vorhandene Betriebszustand weitergeführt.

FIG.1

## Sicherheitsvorrichtung für Steuer- und Regeleinrichtungen

Die Erfindung betrifft eine Sicherheitsvorrichtung für Steuer- und Regeleinrichtungen nach den Oberbegriffen der Ansprüche 1 bzw. 11.

Durch den Einsatz immer komplizierterer und umfangreicher Elektronik bei Steuer- und Regeleinrichtungen, beispielsweise in deren Stromversorgungseinrichtungen, den Fühlgliedern oder den den Fühlgliedern nachgeschalteten Einrichtungen zur Signalvorverarbeitung sowie in den eigentlichen, heuzutage häufig mikroprozessor-bestückten Steuer-und Regeleinrichtungen, kann unter Umständen der Ausfall einer Systemkomponente den Ausfall der gesamten Steuer-bzw. Regeleinrichtung bewirken. Dabei kann es auch vorkommen, daß unerwünschte oder gefährliche Zustände der geregelten oder gesteuerten Objekte auftreten können.

Es gibt im Stand der Technik bereits Sicherheitsvorrichtungen für Steuer- und Regeleinrichtungen, die beispielsweise beim Ausfall einer Stromversorgungseinrichtung eine Umschaltung auf eine Reservesteuer- oder -regeleinrichtung oder eine Notsteuer- bzw. Regeleinrichtung bewirken.

Der Umschaltvorgang kann manuell oder automatisch eingeleitet werden. Im Reserve- oder Notbetrieb sollen dann gewisse Funktionen zur Aufrechterhaltung eines Notbetriebs von der Reservesteuer- bzw. -regeleinrichtung übernommen werden. Zur Durchführung des Umschaltvorganges werden dabei häufig elektromechanisch betätigte Relaisschalter verwendet. Beim Ausfall einer Stromversorgungseinrichtung kann es vorkommen, daß der Relaisschalter seinen für den Umschaltvorgang vorgesehenen Schaltzustand nicht annehmen kann.

Außerdem können beim Ausfall eines oder mehrerer Fühlglieder, wenn diese fehlerhafte Signale abgeben, unerwünschte Steuer- bzw. Regelschritte ausgeführt werden.

Es ist deshalb Aufgabe der Erfindung, eine Sicherheitsvorrichtung für elektrische Steuer- und Regeleinrichtungen zum Steuern bzw. Regeln mindestens eines Objekts anzugeben, die auch bei Ausfall der im Normalbetrieb den Versorgungsstrom einspeisenden Stromversorgungseinrichtung sowie beim Ausfall eines oder mehrerer Fühlglieder stets die Einstellung sicherer Zustände der gesteuerten bzw. geregelten Objekte gewährleistet und insbesondere für Reglersysteme von Heizungsanlagen verwendbar ist.

Die Aufgabe wird gemäß dem Kennzeichen der Patentansprüche 1, 13 bzw. 14 gelöst. Vorteilhafte Ausführungsformen sind Gegenstand der abhängigen Ansprüche.

Die erfindungsgemäße Sicherheitsvorrichtung für elektrische Steuer-und Regeleinrichtungen zum Steuern bzw. Regeln mindestens eines Objekts, wie insbesondere eines Heizungssystems, umfaßt eine Stromversorgungseinrichtung, eine Stromrichtereinrichtung, die die von der Stromversorgungseinrichtung gelieferte Versorgungsspannung in eine Speisegleichspannung für die Steuer- bzw. Regeleinrichtung zu deren Speisung im Normalbetrieb umformt, eine Reservesteuer-bzw. -regeleinrichtung zum Reservebetrieb zumindest eines Teils der geregelten Objekte, eine Reservespeiseeinrichtung zur Speisung der Reservesteuer- bzw. -regeleinrichtung und/oder der geregelten Objekte und eine Umschalteinrichtung mit mindestens einem durch mindestens ein elektromechanisches Relais betätigten Schaltkontakt zum manuellen und/oder automatischen Umschalten im Falle des Reservebetriebs auf die Reservesteuer- bzw. -regeleinrichtung und auf die Reservespeiseeinrichtung und ist dadurch gekennzeichnet, daß alle Relais der Umschalteinrichtung durch diese zur Umschaltung auf den Reservebetrieb stromlos geschaltet werden und die davon betätigten Schaltkontakte im stromlosen Ruhezustand der Relais die dem Reservebetrieb entsprechenden Schaltstellungen einnehmen.

Bei einer Regeleinrichtung, die einen oder mehrere Fühlglieder zur Erfassung von Betriebszuständen der geregelten Objekte aufweist, wird die Umschalteinrichtung zum Umschalten auf den Reservebetrieb vorteilhafterweise betätigt, wenn zumindest ein Fühlglied ausfällt oder fehlerhafte Signale abgibt.

Dazu ist vorteilhafterweise eine Erfassungseinrichtung vorgesehen, die den Ausfall- oder Fehlerzustand des oder der Fühlglieder erfaßt und daraufhin ein Signal zum Umschalten an die Umschalteinrichtung abgibt.

Zum manuellen Umschalten auf den Reservebetrieb ist vorteilhafterweise ein Handschalter vorgesehen, der die Versorgungsspannung vor der Stromrichtereinrichtung abschaltet. Alternativ kann zum manuellen Umschalten auf den Reservebetrieb auch ein Handschalter die vom Stromrichter der Umschalteinrichtung eingespeiste Gleichspannung abschalten.

Als Stromversorgungseinrichtung können sowohl ein Wechselstromnetz als auch ein Gleichstromnetz vorgesehen sein, wobei die Reservespeiseeinrichtung je nach Bedarf einen Wechselstrom oder einen Gleichstrom liefert.

Falls die Reservespeiseeinrichtung die gleiche Stromart wie die Stromversorgungseinrichtung erzeugen muß, kann die Reservespeiseeinrichtung auch mit der Stromversorgungseinrichtung gekoppelt sein.

Es kann jedoch auch vorteilhaft sein, eine separate Reservespeiseeinrichtung, beispielsweise eine Batterie, zur Reservespeisung zumindest der Reservesteuer- bzw. -regeleinrichtung vorzusehen.

Ferner kann vorteilhafterweise eine Stromerfassungseinrichtung den von der Stromversorgungseinrichtung eingespeisten Strom und/oder den vom Stromrichter der Steuer-bzw. Regeleinrichtung eingespeisten Gleichstrom erfassen und ein den Zustand des primären Versorgungsnetzes und/oder den Zustand des sekundären Speisekreises angebendes Signal erzeugen, welches von der Umschalteinrichtung zum automatischen Umschalten auf den Reservebetrieb verwendet wird.

Die Steuer- bzw. Regeleinrichtung weist vorteilhafterweise einen Digitalrechner auf, der zumindest aus Zentral prozessoreinheit, Programm- und Datenspeicher besteht, welcher Informationen über Signale vom den Fühlgliedern und/oder der Stromerfassungseinrichtung empfängt, Plausibilitätskontrollen bezüglich der Signale durchführt, dadurch fehlerhafte Signale erfaßt und auf der Basis gespeicherter Umschaltkriterien entsprechende Umschaltsignale an die Umschalteinrichtung liefert.

Vorteilhafterweise weist Digitalrechner einen dynamischen RAM-Speicher als Datenspeicher und eine Reservespeiseeinrichtung zumindest für den dynamischen RAM-Speicher in Form einer Pufferbatterie auf.

Günstigerweise wird die Pufferbatterie im Normalbetrieb durch die vom Stromrichter erzeugte Gleichspannung aufgeladen und beim Umschalten auf den Reservebetrieb durch die Umschalteinrichtung von dieser Gleichspannung abgekoppelt.

Zur Durchführung der Plausibilitätskontrollen speichert der Digitalrechner vorteilhaft eine Zustandsverwaltungstabelle, so daß beim Ausfall oder Defekt eines oder mehrerer Fühlglieder der vorher aktuelle Betriebszustand gespeichert wird.

Eine erfindungsgemäß besonders günstige Sicherheitsvorrichtung für elektrische Steuer- und Regeleinrichtungen zum Steuern bzw. Regeln mindestens eines Objekts umfaßt eine Stromversorgungseinrichtung, eine Stromrichtereinrichtung, die die von der Stromversorgungseinrichtung gelieferte Versorgungsspannung in eine Speisegleichspannung für die Steuer- bzw. Regeleinrichtung zu deren Speisung im Normalbetrieb umformt, eine Reservesteuer- bzw. -regeleinrichtung zum Reservebetrieb zumindest eines Teils der geregelten Objekte, eine Reservespeiseeinrichtung zur Speisung der Reservesteuer- bzw. -regeleinrichtung und/oder der geregelten Objekte und eine Umschalteinrichtung mit mindestens einem durch zumindest ein elektromechanisches Relais betätigten Schaltkontakt zum manuellen und/oder automatischen Umschalten im Falle des Reservebetriebs auf die Reservesteuer- bzw. -regeleinrichtung und auf die Reservespeiseeinrichtung, wobei mindestens ein Fühlglied zur Erfassung von Betriebszuständen des oder der geregelten Objekte vorgesehen ist, die Steuer- bzw. Regeleinrichtung einen Digitalrechner zumindest mit Zentralprozessoreinheit, Programm- und Datenspeicher aufweist, der die Signale der Fühlglieder Plausibilitätskontrollen unterwirft, fehlerhafte Fühlersignale erfaßt und auf der Basis gespeicherter Umschaltkriterien Signale zur Betätigung der Umschalteinrichtung abgibt; sie ist erfindungsgemäß dadurch gekennzeichnet, daß alle Relais durch die Umschalteinrichtung zur Umschaltung auf den Reservebetrieb stromlos geschaltet werden, die von den Relais betätigten Schaltkontakte im Ruhezustand der Relais die für den Reservebetrieb vorgesehenen Schaltungen herstellen und der Digitalrechner zum Zwecke der Plausibilitätskontrolle eine Zustandsverwaltungstabelle speichert und beim Ausfall oder Fehlerfall eines oder mehrerer Fühlglieder den vorher aktuellen Betriebszustand hält.

Dadurch, daß erfindungsgemäß alle Relais der Umschalteinrichtung durch diese zum Umschalten auf den Reservebetrieb stromlos geschaltet werden und die davon betätigten Schalter im Ruhezustand der Relais die für den Reservebetrieb vorgesehenen Schaltungen herstellen, kann vorteilhafterweise immer gewährleistet werden, daß die für den Reserve- oder Notbetrieb nötigen Schalterstellungen beim Ausfall der Stromversorgungseinrichtung oder der Stromrichtereinrichtung richtig hergestellt werden. Dadurch können unsichere oder gefährliche Zustände der geregelten Objekte beim Umschalten vermieden werden.

Ferner wird durch die Weiterführung des Betriebs mit den vor dem Ausfall einer Fühlereinrichtung gespeicherten Betriebszuständen sichergestellt, daß auch beim Ausfall von Fühlern im Not- bzw. Reservebetrieb keine unerwünschten oder gefährlichen Betriebszustände bei den geregelten oder gesteuerten Objekten auftreten können.

Die Erfindung wird im folgenden in Ausführungsbeispielen anhand der Zeichnung näher erläutert. Es zeigen:

Fig. 1 ein Blockschaltbild einer Ausführungsart der Sicherheitsvorrichtung gemäß der Erfindung;

Fig. 2 eine alternative Ausführungsart der Sicherheitsvorrichtung gemäß der Erfindung und

Fig. 3 eine weitere Ausführungsart der erfindungsgemäßen Sicherheitsvorrichtung mit einer in der Steuer-bzw. Regeleinrichtung vorgesehenen Digitalrechnereinrichtung und einer zumindest einen Teil der Digitalrechnervorrichtung bei Ausfall der normalen Speisung speisenden Reservespeiseeinrichtung in Form einer Pufferbatterie.

In den Ausführungsbeispielen ist die erfindungsgemäße Sicherheitsvorrichtung beispielhaft in einer wärmetechnischen Regeleinrichtung dargestellt.

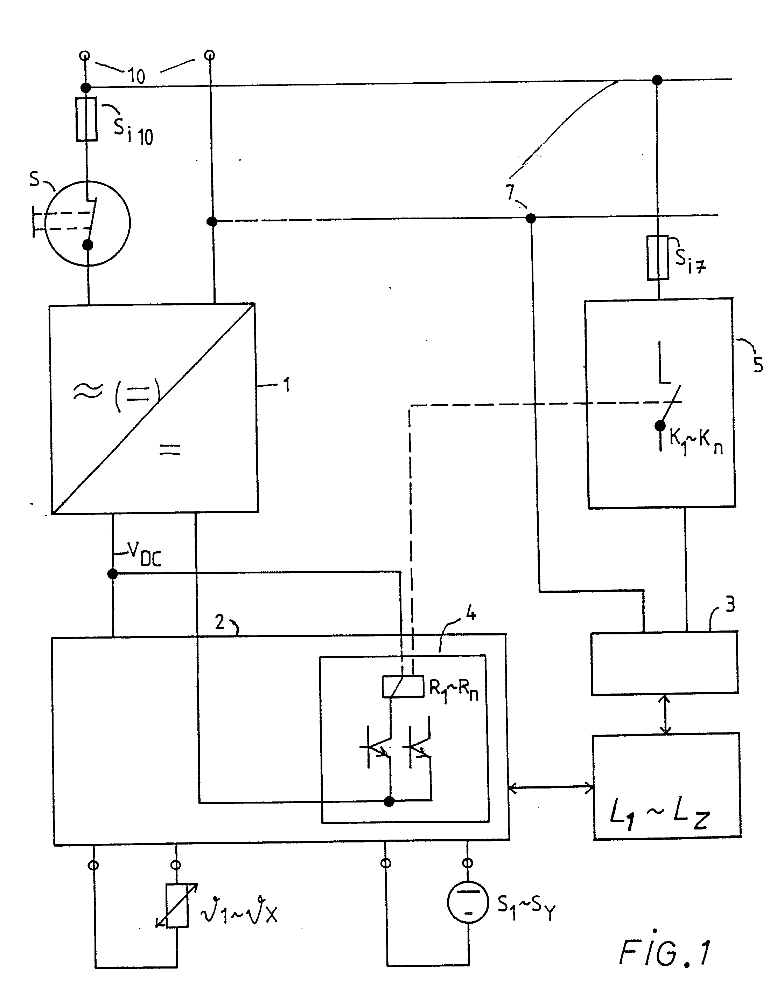

Gemäß Fig. 1 wird eine Regeleinrichtung 2 von einer Stromversorgungseinrichtung 10 über eine Stromrichtereinrichtung 1 gespeist. Die Stromrichtereinrichtung kann bei spielsweise eine Gleichrichtereinrichtung sein, die eine von der als Wechselstromnetz ausgebildeten Stromversorgungseinrichtung gelieferte Wechselspannung zu einer zur Speisung der Regeleinrichtung 2 geeignete Gleichspannung $V_{DC}$ umformt. Zumindest in einer der Speiseleitungen ist eine Sicherung $Si_{10}$ vorgesehen.

Die Regeleinrichtung empfängt Signale von Fühlern $\vartheta_1$ ... $\vartheta_x$, beispielsweise Temperaturfühlern und von Fühlern $S_1$ ... $S_y$ einer anderen Kategorie, beispielsweise Photodetektoren. Eine Umschalteinrichtung 4 schaltet automatisch oder auf manuelle Anforderung von dem Normalbetrieb in den Reserveregelbetrieb um.

Dazu weist die Umschalteinrichtung elektromechanisch arbeitende Relaisschalter mit Relaiswicklungen $R_1$, ... $R_n$ und von ihnen betätigte Schaltkontakte $K_1$, ... $K_n$ auf.

Um die Übersichtlichkeit des Blockschaltbildes zu erhöhen, sind die durch die Relaiswicklungen $R_1$, ... $R_n$ betätigten Schaltkontakte $K_1$, ... $K_n$ in einem separaten Funktionsblock 5 angeordnet. Dabei sind im Funktionsblock 5 diejenigen Schaltkontakte $K_1$, ... $K_n$ dargestellt, die für den Umschaltvorgang vom Normal- in den Reserve- oder Notbetrieb von Bedeutung sind.

Erfindungsgemäß sind sämtliche Relaiswicklungen $R_1$, ... $R_n$ im Normalbetrieb stromdurchflossen und werden zur Umschaltung auf den Reservebzw. Notbetrieb durch die Umschalteinrichtung 4 stromlos gemacht. Dann nehmen die im Block 5 befindlichen Schaltkontakte im Ruhezustand der Relaiswicklungen die für den Reserve- oder Notbetrieb vorgesehenen Schaltstellungen ein. Dabei können die Schaltkontakte $K_1$, ... $K_n$ je nach Schaltfunktion Öffner oder Schließer sein.

Die Umschalteinrichtung 4 kann die Umschaltung auf den Reserve- bzw. Notbetrieb auf ein von der Regeleinrichtung 2 beispielsweise beim Ausfall eines oder mehrerer Fühler empfangenes Signal bewirken. Genauso wird die Umschaltung auf den Reserve- oder Notbetrieb bewirkt, wenn die Stromversorgungseinrichtung ausfällt und wenn ein Handschalter S manuell betätigt wird, der beim Öffnen die Stromversorgung abschaltet.

Falls die Stromversorgungseinrichtung 10 eine hohe Ausfallsicherheit hat, wie dies beispielsweise beim technischen Wechselstromnetz der Fall ist, kann die Reservespeiseeinrichtung 7 direkt mit der Stromversorgungseinrichtung 10 gekoppelt sein.

Alternativ kann auch eine separate Reservespeiseeinrichtung 7 vorgesehen sein. Dann ist zumindest eine Leitung der Reservespeiseeinrichtung 7 mit einer separaten Sicherung $Si_7$ abgesichert.

Nach dem Umschaltvorgang werden die geregelten Objekte $L_1$, ... $L_z$ insgesamt oder teilweise durch eine Reserveregeleinrichtung 3 geregelt. Durch die erfindungsgemäßen Maßnahmen, daß alle Relais der Umschalteinrichtung durch diese zum Umschalten auf den Reservebetrieb stromlos geschaltet werden und daß die davon betätigten Schalter im Ruhezustand der Relais die für den Reservebetrieb vorgesehenen Schaltungen herstellen, ist sichergestellt, daß im Reserve- oder Notbetrieb keine durch unvorhersehbare Relaiszustände beim Ausfall der Stromversorgung bewirkte unerwünschten oder gefährlichen Betriebszustände der geregelten Objekte auftreten können.

Dadurch ist sichergestellt, daß auch beim Ausfall der Stromversorgung eine automatische Umschaltung auf den Reserve- oder Notbetrieb durchgeführt wird.

Bei der in Fig. 1 dargestellten Ausführungsform ist der Handschalter S, der zum manuellen Umschalten auf den Reserve- bzw. Notbetrieb dient, in einer der Speiseleitungen der Stromrichtereinrichtung eingeschaltet.

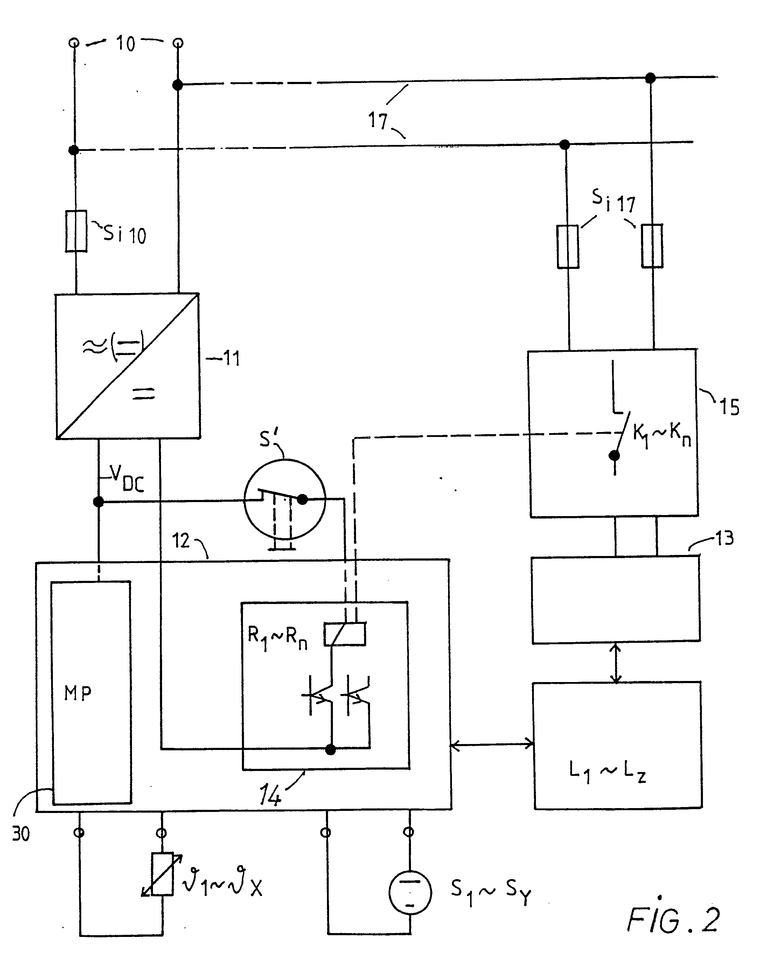

Fig. 2 zeigt eine alternative Ausführung, bei der der Handschalter $S'$ stattdessen in die Stromzuführleitung für die Relaiswicklungen $R_1$, ... $R_n$ zum Umschalten auf Reserve- bzw. Notbetrieb eingeschaltet ist.

Dadurch ist sichergestellt, daß bei der manuellen Einleitung des Umschaltvorganges auf den Reserve- oder Notbetrieb nur der durch die Relaiswicklungen $R_1$, ... $R_n$ fließende Strom abgeschaltet wird, während der die Regeleinrichtung 12 speisende Strom nicht unterbrochen wird.

Jedoch ist auch bei dem in Fig. 2 dargestellten Ausführungsbeispiel eine Umschaltung auf Reserve- bzw. Notbetrieb gewährleistet, wenn die Stromversorgungseinrichtung 10 oder die Stromrichtereinrichtung 11 ausfällt.

Das in Fig. 2 dargestellte Ausführungsbeispiel zeigt außerdem einen in der Regeleinrichtung 12 vorgesehenen Digitalrechner 30, deren Speisung somit durch die andere Einschaltung des Handschalters $S'$ durch dessen Betätigung nicht abgeschaltet wird. Der Digitalrechner kann aus einem eine CPU, RAM oder ROM aufweisenden Mikroprozessor (MP) bestehen.

Die in Fig. 2 dargestellten Komponenten Stromrichtereinrichtung 11, Reserveregeleinrichtung 13, Umschalteinrichtung 14 mit den Relaiswicklungen $R_1$, ... $R_n$ und den davon betätigten Schaltkontakten $K_1$, ... $K_n$ im Block 15 sowie die Reservespeiseeinrichtung 17 entsprechen jeweils den Schaltungskomponenten 1, 3, 4, 5 und 7 in Fig. 1 und werden deshalb an dieser Stelle nicht weiter erläutert.

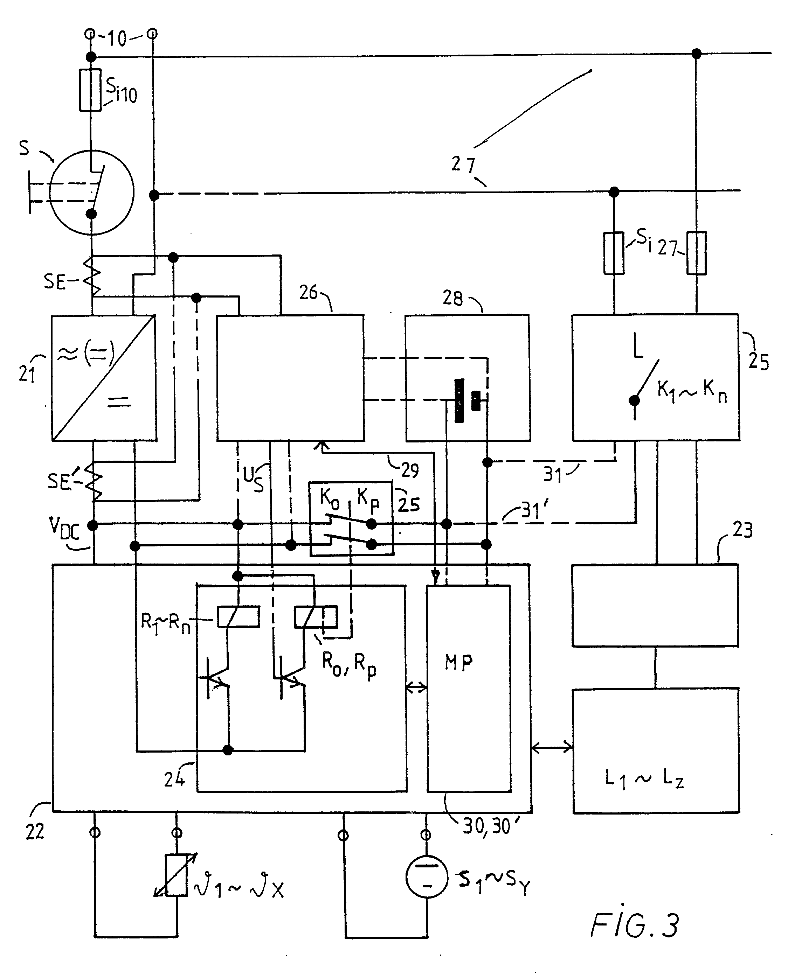

Fig. 3 zeigt eine ·Ausführungsart der erfindungsgemäßen Sicherheitsvorrichtung, bei der über die Ausführungsarten gemäß Fig. 1 und Fig. 2 hinausgehend auch Maßnahmen ergriffen sind, auch dann auf den Reserve- bzw. Notbetrieb umzuschalten, wenn der Strom bzw. die Speisespannung über die Toleranzen hinausgehende Schwankungen aufweisen. Eine einen Mikroprozessor als Digitalrechner 30, 30' aufweisende Regeleinrichtung 22 wird von einer Stromversorgungseinrichtung 10 durch eine Stromrichtereinrichtung 21 gespeist. Strom- oder Spannungsfühler SE, SE' sind vor der Stromrichtereinrichtung 21 und/oder nach der Stromrichtereinrichtung 21 jeweils in den Speiseleitungen vorgesehen. Die von den Strom- oder Spannungsfühlern SE, SE' gelieferten Signale werden einer Stromerfassungseinrichtung 26 zugeführt, die daraus Signale erzeugt, die der Umschalteinrichtung 24 zugeführt werden und diese zur Umschaltung auf den Reserve- oder Notbetrieb veranlassen. Die Stromerfassungseinrichtung 26 wird ihrerseits von dem von der Stromrichtereinrichtung 21 erzeugten Gleichstrom mit der Spannung $V_{DC}$ gespeist.

Alternativ dazu kann die Stromerfassungseinrichtung 26 auch von einer Pufferbatterie 28 gespeist werden, deren sonstiger Zweck nachstehend beschrieben wird.

Der MP 30, 30' besteht beispielsweise aus Zentralprozessoreinheit mit einem Programm- und Datenspeicher 30'.

Bei Ausfall der die Regeleinrichtung 22 und den MP 30, 30' speisenden Spannung $V_{DC}$ muß zumindest ein Teil der im Datenspeicher 30' gespeicherten Daten sichergestellt werden. Dies geschieht dadurch, daß die Speisung zumindest des Datenspeichers 30', der z.B. ein dynamischer RAM-Speicher ist, mittels einer Pufferbatterie, die hier als Reservespeiseeinrichtung für zumindest den Datenspeicher 30' dient, geschieht.

Im Normalbetrieb der Anordnung wird die Pufferbatterie 28 von der Gleichspannung $V_{DC}$ in geladenem Zustand gehalten. Beim Ausfall der Versorgungsgleichspannung $V_{DC}$ oder wenn diese größere Schwankungen erfährt, werden durch die Umschalteinrichtung 24, in letzterem Fall angesteuert durch die Stromerfassungseinrichtung 26, die Relaiswicklungen $R_1$, ... $R_n$ und zusätzlich Relaiswicklungen $R_o$, $R_p$ stromlos gemacht, wodurch einerseits die Schaltkontakte $K_1$, ... $K_n$ ihre zur Umschaltung auf den Reserve- oder Notbetrieb vorgesehenen Kontaktstellungen annehmen und andererseits Schaltkontakte $K_o$, $K_p$ betätigt von den Relaiswicklungen $R_o$ und $R_p$ geöffnet werden, so daß die Pufferbatterie 28 von den Leitungen der Versorgungsgleichspannung $V_{DC}$ abgetrennt wird.

Dadurch wird während des Reserve- bzw. Notbetriebs der dynamische RAM-Speicher 30' der Mikroprozessoreinrichtung durch die Pufferbatterie 28 gespeist, wodurch die in dem RAM-Speicher 30' gespeicherten Daten gesichert sind.

Die Reservespeisung der Reserveregeleinrichtung 23 kann, wie bereits bei den in Fig. 1 und 2 dargestellten Ausführungsbeispielen, entweder eine separate Reservespeiseeinrichtung 27 oder mit der Stromversorgungseinrichtung 10 gekoppelt sein.

Zu den im RAM-Speicher 30' gespeicherten Daten gehören gemäß einer bevorzugten Ausführungsart der Erfindung Daten, die der Mikroprozessor 30 benötigt, um von den Fühlgliedern $\vartheta_1$, ... $\vartheta_x$ und $S_1$, ... $S_y$ empfangene Signale Plausibilitätskontrollen zu unterwerfen.

Vorteilhafterweise werden durch den Mikroprozessor dynamische Plausibilitätskontrollen durchgeführt, indem dieser jeweils aktuelle Signalwerte mit zuvor erhaltenen und gespeicherten Signalwerten vergleicht und deren Änderungswerte z.B. aus deren Differentialquotienten ermittelt.

In derselben Weise können auch die jeweils aktuellen Betriebszustände der geregelten Objekte $L_1$, ... $L_z$ mit zuvor erzeugten bzw. vorliegenden und gespeicherten Betriebszuständen verglichen und die Änderungswerte ermittelt werden.

Die oben angeführten, zum Zweck der Plausibilitätskontrolle durchgeführten Vergleiche werden zweckmäßig mit Hilfe einer Zustandsverwaltungstabelle durchgeführt, die die jeweiligen Betriebs- und Signalzustände speichert und entsprechenden Programmen zuordnet.

Beim Ausfall oder Fehlerfall eines oder mehrerer Fühlglieder oder beim Auftreten nicht plausibler Betriebszustände der geregelten Objekte $L_1$, ... $L_z$ wird dann vorteilhafterweise eine Umschaltung auf den Reserve- oder Notbetrieb mittels eines vom Digitalrechner 30 erzeugten Umschaltsignals durchgeführt.

Mittels der im RAM-Speicher 30' sichergestellten Zustandsverwaltungstabelle kann erreicht werden, daß auch nach dem Wiederherstellen des Normalbetriebs, der jeweils vor Umschalten in den Reserve- oder Notbetrieb vorhandene aktuelle Betriebszustand weitergeführt wird, so daß immer sichere Zustände realisiert werden.

Folgende Abwandlungen der in Fig. 3 dargestellten Ausführungsart sind erfindungsgemäß möglich:

1. Der zur manuellen Umschaltung dienende Handschalter S' kann wie bei der Ausführungsart in Fig. 2 unmittelbar in die die Relaiswicklungen mit Strom versorgende Leitung eingeschaltet sein;

2. die Stromerfassungseinrichtung 26 kann auch als funktioneller Teil der Digitalrechnereinrichtung 30, 30' ausgeführt sein, wie dies die zwischen Digitalrechner 30, 30' und Stromerfassungseinrichtung 26 vorgesehenen Signalleitungen 29 darstellen;

3. das Aufladen der Pufferbatterie 28 kann statt durch die Versorgungsgleichspannung $V_{DC}$, die der Stromrichter 21 liefert, auch von der Reservespeiseeinrichtung 27 erfolgen, falls diese völlig getrennt von der Stromversorgungseinrichtung 10 ist. Beispielsweise kann die Reservespeiseeinrichtung eine Gleichstrom liefernde Ersatzspeisebatterie sein. Die Aufladung der Pufferbatterie 28 erfolgt dann über die gestrichelt eingezeichneten Leitungen 31 und 31'.

**Ansprüche**

1. Sicherheitsvorrichtung für elektrische Steuer- und Regeleinrichtungen zum Steuern bzw. Regeln mindestens eines Objekts ($L_1$, ... $L_z$) mit
einer Stromversorgungseinrichtung (10),
einer Stromrichtereinrichtung (1; 11; 21), die die von der Stromversorgungseinrichtung (10) gelieferte Versorgungsspannung in eine Speisegleichspannung ($V_{DC}$) für die Steuer- bzw. Regeleinrichtung (2; 12; 22) zu deren Speisung im Normalbetrieb umformt,
einer Reservesteuer- bzw. -regeleinrichtung (3; 13; 23) zum Reservebetrieb zumindest eines Teils der geregelten Objekte ($L_1$, ... $L_z$)
einer Reservespeiseeinrichtung (7; 17; 27; 28) zur Speisung der Reservesteuer- bzw. -regeleinrichtung (3; 13; 23) und/oder der geregelten Objekte ($L_1$, ... $L_z$) und
einer Umschalteinrichtung (4, 5; 14, 15; 24, 25) mit mindestens einem durch mindestens ein elektromechanisches Relais $R_1$, ... $R_n$; $R_o$, $R_p$) betätigten Schaltkontakt ($K_1$, ... ...$K_n$, $K_o$, $K_p$) zum manuellen und/oder automatischen Umschalten im Falle des Reservebetriebs auf die Reservesteuer- bzw. -regeleinrichtung (3; 13; 23) und auf die Reservespeiseeinrichtung (7; 17; 27; 28), dadurch gekennzeichnet, daß
die Umschalteinrichtung (4, 5; 14, 15; 24, 25) alle Relais ($R_1$, ... $R_n$; $R_o$, $R_p$) zur Umschaltung auf den Reservebetrieb stromlos schaltet
und
die davon betätigten Schaltkontakte ($K_1$, ... $K_n$; $K_o$, $K_p$) im stromlosen Ruhezustand der Relais die für den Reservebetrieb vorgesehenen Schaltungen herstellen.

2. Sicherheitsvorrichtung nach Anspruch 1, dadurch gekennzeichnet, daß
die Regeleinrichtung einen oder mehrere Fühlglieder ($\vartheta_1$, ..., $\vartheta_x$; $S_1$, ..., $S_y$) zur Erfassung von Betriebszuständen der geregelten Objekte ($L_1$, ..., $L_z$) aufweist und

die Umschalteinrichtung (4, 5; 14, 15; 24, 25) auf den Reservebetrieb umschaltet, wenn zumindest ein Fühlglied ($\vartheta_1$, ..., $\vartheta_x$; $S_1$, ... $S_y$) ausfällt oder fehlerhafte Signale abgibt.

3. Sicherheitsvorrichtung nach Anspruch 1 oder 2, gekennzeichnet durch eine Erfassungseinrichtung (2; 12; 22) die den Ausfall- oder Fehlerzustand des oder der Fühlglieder erfaßt und daraufhin ein Signal zum Umschalten an die Umschalteinrichtung (4, 5; 14, 15; 24, 25) abgibt.

4. Sicherheitsvorrichtung nach einem der Ansprüche 1-3, dadurch gekennzeichnet, daß zum manuellen Umschalten auf den Reservebetrieb ein Handschalter (S) vorgesehen ist, der die Versorgungsspannung vor der Stromrichtereinrichtung (1; 11; 21) abschaltet, und
die Reservespeiseeinrichtung (7; 27) durch die Stromversorgungseinrichtung (10) gebildet ist.

5. Sicherheitsvorrichtung nach einem der Ansprüche 1 bis 3, dadurch gekennzeichnet, daß zum manuellen Umschalten auf den Reservebetrieb ein Handschalter (S') vorgesehen ist, der die vom Stromrichter (1; 11; 21) der Umschalteinrichtung (4; 14; 24) eingespeiste Gleichspannung ($V_{DC}$) abschaltet.

6. Sicherheitsvorrichtung nach Anspruch 4 oder 5, dadurch gekennzeichnet, daß
ein Wechselstromnetz als Stromversorgungseinrichtung (10) vorgesehen ist und
die Reservespeiseeinrichtung (7; 27) einen Wechselstrom liefert.

7. Sicherheitsvorrichtung nach Anspruch 4 oder 5, dadurch gekennzeichnet, daß ein Gleichstromnetz als Stromversorgungseinrichtung (10) vorgesehen ist und die Reservespeiseeinrichtung (17) einen Gleichstrom liefert.

8. Sicherheitsvorrichtung nach einem der Ansprüche 1 bis 7, dadurch gekennzeichnet, daß
eine Stromerfassungseinrichtung (26) vorgesehen ist, die den von der Stromversorgungseinrichtung (10) eingespeisten Strom und/oder den vom Stromrichter (1; 11; 21) der Steuer- bzw. Regeleinrichtung (2; 12; 22) eingespeisten Gleichstrom ($V_{DC}$) erfaßt und ein dem Zustand des primären Versorgungsnetzes und/oder den Zustand des sekundären Speisekreises entsprechendes Signal ($U_s$) erzeugt, auf dessen Empfang die Umschalteinrichtung (4; 14; 24) automatisch auf den Reservebetrieb umschaltet.

9. Sicherheitsvorrichtung nach einem der Ansprüche 1, 2 oder 8, dadurch gekennzeichnet, daß die Steuer- bzw. Regeleinrichtung einen Digitalrechner (30, 30') mit Zentralprozessoreinheit, Programm- und Datenspeicher aufweist, der Informationen über die Signale von den Fühlgliedern und/oder der Stromerfassungseinrichtung (26) empfängt, Plausibilitätskontrollen bezüglich der Signale durchführt, dadurch fehlerhafte Signale erfaßt und auf der Basis gespeicherter Umschaltkriterien entsprechende Umschaltsignale an die Umschalteinrichtung (4; 14; 24) liefert.

10. Sicherheitsvorrichtung nach Anspruch 9, dadurch gekennzeichnet, daß der Digitalrechner (30, 30') eine Zustandsverwaltungstabelle zum Zwecke der Plausibilitätskontrolle speichert und beim Ausfall oder Defekt eines oder mehrerer Fühlglieder den vorher aktuellen Betriebszustand hält.

11. Sicherheitsvorrichtung nach Anspruch 1, wobei mindestens ein Fühlglied ($\vartheta_1$, ..., $\vartheta_x$; $S_1$, ... $S_y$) zur Erfassung von Betriebszuständen geregelter Objekte ($L_1$, ... $L_z$) vorgesehen ist, die Steuer- bzw. Regeleinrichtung einen Digitalrechner (30, 30') zumindest mit Zentralprozessoreinheit, Programm-und Datenspeicher aufweist, der die Signale der Fühlglieder Plausibilitätskontrollen unterwirft, fehlerhafte Fühlersignale erfaßt und auf der Basis gespeicherter Umschaltkriterien Signale zur Betätigung der Umschalteinrichtung abgibt, dadurch gekennzeichnet, daß alle Relais ($R_1$, ... $R_n$; $R_o$, $R_p$) durch die Umschalteinrichtung (4, 5; 14, 15; 24, 25) zur Umschaltung auf den Reservebetrieb stromlos geschaltet werden, die von den Relais betätigten Schaltkontakte ($K_1$, ... $K_n$; $K_o$, $K_p$) im stromlosen Ruhezustand der Relais die für den Reservebetrieb vorgesehenen Schaltungen herstellen, und daß der Digitalrechner (27) zum Zwecke der Plausibilitätskontrolle eine Zustandsverwaltungstabelle speichert und beim Ausfall oder Fehlerfall eines oder mehrerer Fühlglieder den vorher aktuellen Betriebszustand hält.

12. Sicherheitsvorrichtung nach einem der Ansprüche 1 bis 11 dadurch gekennzeichnet, daß der Digitalrechner (30, 30') einen dynamischen RAM-Speicher (30')aufweist und eine Reservespeiseeinrichtung (28) zumindest für den dynamischen RAM-Speicher (30') in Form einer Pufferbatterie (28) vorgesehen ist.

13. Heizungssystem mit zentraler Wärmequelle, gekennzeichnet durch eine Sicherheitsvorrichtung nach einem der Ansprüche 1 bis 12.

14. Verwendung der Sicherheitsvorrichtung nach einem der Ansprüche 1 bis 12 in Heizungssystemen mit zentraler Wärmequelle.

FIG.1

FIG.2

FIG.3

Europäisches
Patentamt

EUROPÄISCHER RECHERCHENBERICHT

Nummer der Anmeldung

EP 88 10 2375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, Nr. 32 (E-379)[2089], 7. Februar 1986; & JP-A-60 189 332 (NITSUTAN K.K.) 26-09-1985 * Zusammenfassung * | 1 | H 02 J 9/06 |
| | --- | | |
| A | GB-A-2 123 986 (TOKYO SHIBAURA DENKI) * Seite 3, Zeile 18 - Seite 3, Zeile 99; Figuren 2,3 * | 1 | |
| | --- | | |
| A | DE-A-3 604 747 (CANON K.K.) * Zusammenfassung; Figuren 5,6,9,20,26 * | 1 | |
| | --- | | |
| A | US-A-4 143 283 (F.E.GRAF) * Spalte 5, Zeile 5 - Zeile 64, Anspruch 1; Figur 1 * | 1 | |
| | ----- | | RECHERCHIERTE SACHGEBIETE (Int. Cl.4) |
| | | | H 02 J G 05 B |

Der vorliegende Recherchenbericht wurde für alle Patentansprüche erstellt

| Recherchenort | Abschlußdatum der Recherche | Prüfer |
|---|---|---|
| DEN HAAG | 18-10-1988 | FOURRICHON,P.M.L. |